# EUROPEAN PATENT SPECIFICATION

(11) **EP 1 766 446 B1**
(45) Date of publication and mention of the grant of the patent: **06.05.2015**
(21) Application number: 05750838.4
(22) Date of filing: 21.06.2005
(51) Int. Cl.: F21V 8/00

(54) **A METHOD OF MAKING LATERALLY RADIATING OPTICAL FIBRES**
VERFAHREN ZUR HERSTELLUNG VON LATERAL AUSSTRAHLENDEN OPTISCHEN FASERN
PROCEDE DE FABRICATION DE FIBRES OPTIQUES A RAYONNEMENT LATERAL

(30) Priority: 21.06.2004 DK 200400179
(43) Date of publication of application: 28.03.2007
(73) Proprietor: TL Lyngså A/S, 9300 Sæby (DK)
(72) Inventor: LAUSTSEN, Torben, DK-9300 Sæby (DK)
(74) Representative: Larsen, Hans Ole
(86) International application number: PCT/DK2005/000418
(87) International publication number: WO 2005/124408

(56) References cited:
- WO-A2-02/16968
- WO-A2-2004/005982
- GB-A- 2 316 760

## Description

### The prior art

The invention relates to a method for making lightguides, i.e. optical fibres, wherein supplied light is radiated laterally, comprising at least one laser transmitting a laser beam onto the fibre, which heats up the fibre at predetermined locations to form one or more reflective areas in the fibre.

It is known to use laterally radiating optical fibres which are made by breaking the sheath around the fibres. This external working of the sheath may comprise partial sand blowing, rolling, heat treatment, etching or laser heating.

WO 02/16968 A2 describes a method for producing a lateral radiating optical fibre by etching holes or treating areas (spots) in the cladding of fibre in the longitudinal direction of the fibre. The reflective spots or holes in the cladding are formed by a laser connected to a moveable platen system, which uses a rotateable table to rotate the fibre.

WO 2004/005982 A2 describes a method for producing a lateral radiating optical fibre by micro-damaging of or removing materials from the layer (boundary region) between the core and the cladding. The reflective areas are formed by a laser connected to an adjustable lens, which is used to form a stripe in the fibre at the certain depth.

GB 2316760 A describes a method for producing a lateral radiating optical fibre, which is scanned by a laser using acoustic-optic modulator and a phase mask to form grating lines extending in entire cross-sectional length of the fibre. The refractive index of the individual grating lines is determined by exposing each grating line to multiple exposures during each scan.

The effect, however, is not very precise because of the inaccuracy involved by this approach, just as it causes a disuniform distribution of the light relative to the light source since, at the beginning, it will be greatly laterally radiating light, while this light intensity will diminish strongly in proportion to the distance from the light source.

This lacking uniformity and precision is a great drawback, because it puts a limit on the use of laterally radiating fibres.

### The object of the invention

The object of the invention is to remedy these defects and limitations in the use of laterally radiating optical fibres, and this is achieved according to the invention by a method, wherein the fibre is heated up at selected locations inside the core by three laser beams to form a plurality of refractive points which reflect part of the supplied light laterally.

This ensures a precise and well-defined location of one or more refraction points inside the fibre itself, while the sheath remains undamaged in its full extent.

Thus, heat affecting defined points inside the fibre itself will ensure uniform lateral radiation in the entire length of the fibre to a great extent, thereby enhancing the possible uses of such optical fibres. When using a laser beam for generating the melting in the fibre, it is possible to achieve a precise orientation of the heat beam, whereby the point will have the desired location in the fibre.

The diffusion/deflection of the light will cause part of the light to be sent out toward the sheath within the critical angle. This light passes through the sheath and is perceived as lateral radiation of light. The light, which is outside the critical angle, is deflected in the lightguide cable and is passed further on through it.

This optical fibre can transport light and emit it laterally radiating in a very precisely defined area/quantity. Owing to the greater control of the loss of light, the light may be transported over a greater distance than with a traditionally laterally radiating lightguide cable. It is possible to create an even light radiation from the laterally radiating cable, in contrast to many techniques where the light radiation will be greatest at the beginning and diminish strongly over length. Furthermore, fibres may be arranged in layers and thereby be formed as a shield with light radiation in several planes.

When, as stated in claim 2, several laser beams are used, these may be oriented differently relative to the point of melting, thereby achieving a high degree of precision and uniformity in the melting.

When, as stated in claim 3 and 4, the laser beam is controlled by a computer, it is possible to make laterally radiating fibres with great precision.

When, as stated in claim 5, fibres are made by means of the same computer program, a high degree of uniformity of the laterally radiating proper-ties of the individual fibres may be ensured.

When, as stated in claim 6, the points are formed with a given refractive index, the lateral light may be dimensioned.

Finally, as stated in claim 7, it is expedient to form the refractive index for the point for a given laterally radiating direction and/or strength.

### The drawing

An example of the method according to the invention will be described more fully below with reference to the drawing, in which
- fig. 1: shows the passage of a light beam through an unworked optical fibre,
- fig. 2: shows a programmed laser beam working of a fibre,
- fig. 3: shows refraction points positioned at various locations in a fibre,
- fig. 4: shows an example of the passage of light beams through a fibre with refraction points, and
- fig. 5: shows a diagram of the light intensity of a generally known laterally radiating fibre and a fibre made according to the invention, respectively.

### Description of the exemplary embodiment

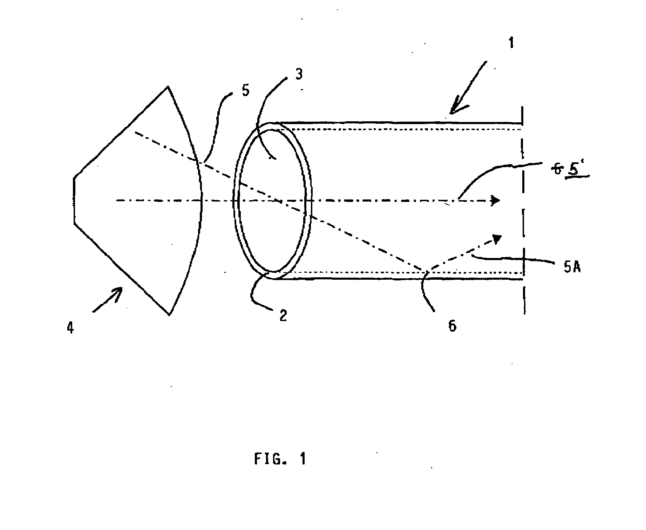

Fig. 1 schematically shows a view of an optical fibre 1 which comprises a light-conducting core 3 surrounded by a sheath 2.

A light beam 5 emitted from a light source 4 will impinge on a point 6 toward the sheath 2 at a given angle of incidence, and be reflected from there and be passed further on as a light beam 5A in a direction toward the centre line further through the core 3.

A light beam 5' extending in the centre line will continue unchanged through the fibre 3.

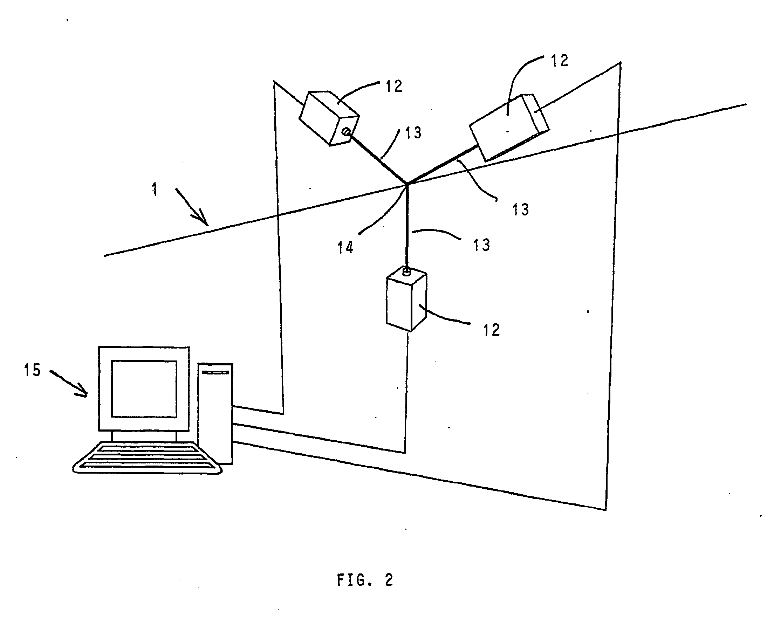

Fig. 2 schematically shows, according to the invention, an optical fibre 1 which is subjected to heat impact from three laser beams 13 from beam sources 12, said laser beams 13 being controlled by a computer 15.

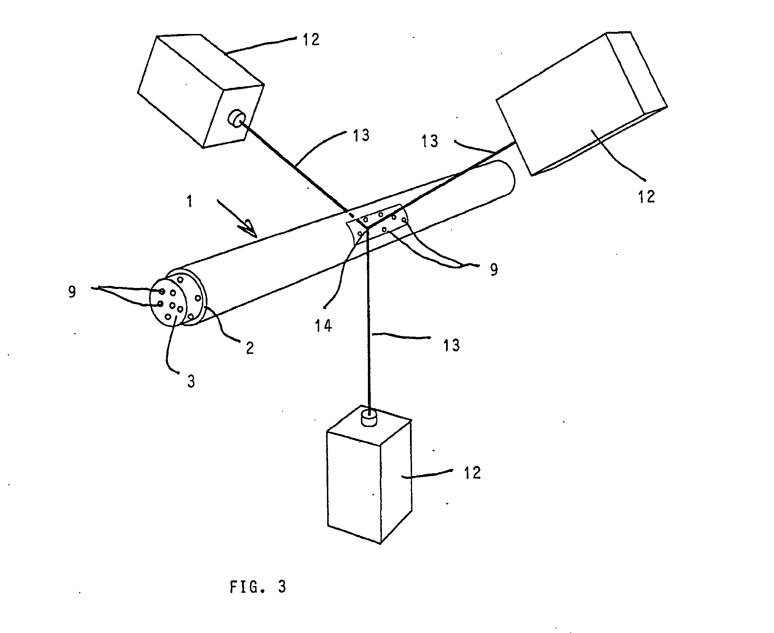

The purpose of this heat treatment will be seen more clearly in fig. 3, which shows an enlarged fibre 1 with sheath 2 and core 3.

Where the three laser beams 13 meet at a common point 14, it will be possible by means of the control of the mutual directions of the beams 13 to heat a point 9 inside the core 3 more precisely to create a changed reflection at the point 9.

The drawing shows a plurality of such points 9 which are positioned at selected locations in the core 3 in the cross-sectional plane as well as the longitudinal plane, as indicated.

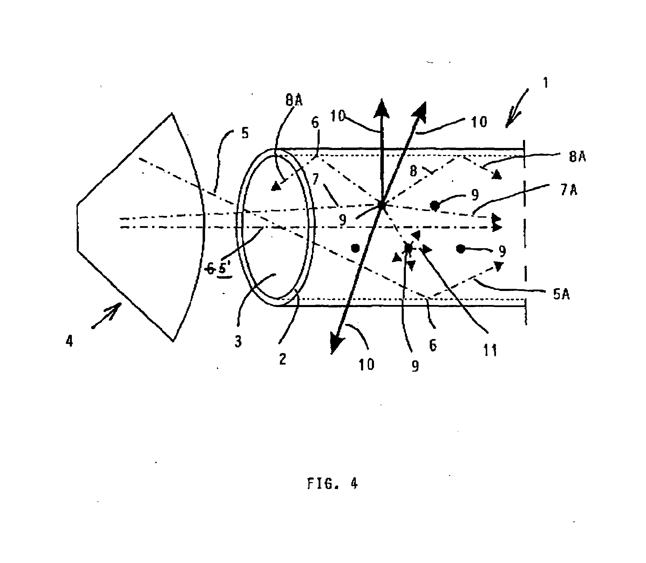

The effect of these points 9 will be described with reference to fig. 4.

A light source 4 sends light into the core 3, and it will be seen that a reflected beam 5 will impinge on a point 6 toward the sheath 2 and be reflected as an angled beam 5A.

Also, a beam 5' through the central axis will extend uninterruptedly through the lightguide 1.

In the case where the light beam impinges on a light refraction point 9, as indicated by the light beam 7, it will be refracted, and part of the light will be emitted as a lateral radiation, as indicated by arrows 10.

This is the effect desired by the invention, viz. a precise location of the point 9 and thereby laterally emitted light 10 radiating precisely from the desired location on the fibre with the desired direction and light intensity.

As indicated by small arrows 11, a light beam impinging on another point 9 will form diffuse light.

Correspondingly, light beams 8 from the point 9 impinging on the sheath 2 at the reflection point 6 will be passed further on as deflected light **8A.**

It will appear from this explanation that a light pattern for an optical fibre may be dimensioned in advance by programming to generate precisely located lateral light emission with the desired direction, colour and intensity. In other words, it will be possible to dimension the structure of the point 9 so as to achieve the desired effect.

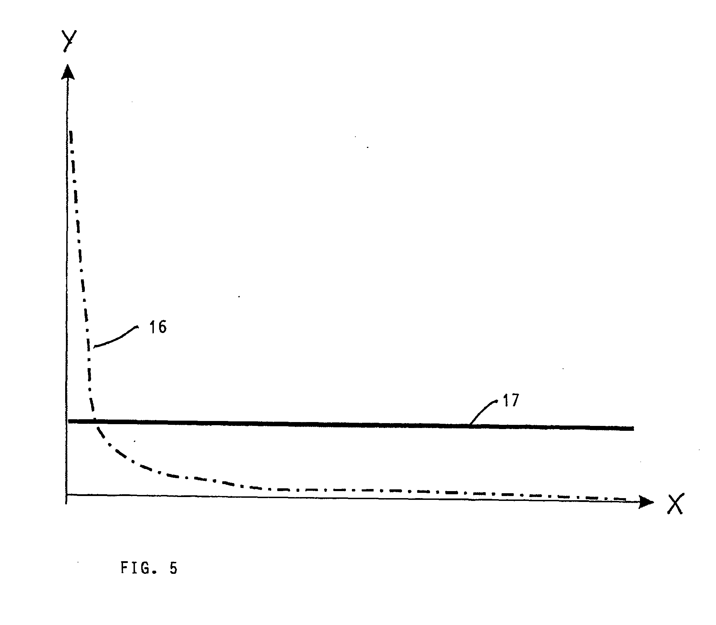

In the method of the invention, the sheath 2 remains undamaged, which gives an unprecedentedly uniform light emission in the longitudinal direction of the fibre, as will appear from the graph in fig. 5. The abscissa x indicates the length of the fibre 1, while the ordinate y indicates the light intensity of the lateral light.

The curve 16 is a generally known fibre with lateral light formed by deformation of the sheath, and it will be seen that the lateral light emission drops dramatically over a short fibre length.

A fibre made according to the invention will exhibit an essentially constant light emission of the lateral light in the entire length of the fibre, as indicated by the curve 17.

## Claims

1. A method for making lightguides, i.e. optical fibres, wherein supplied light is radiated laterally, comprising at least one laser transmitting a laser beam onto the fibre, which heats up the fibre at predetermined locations to form one or more reflective areas in the fibre, **characterized in that** the fibre (1) is heated up at selected locations (14) inside the core (3) by three laser beams (13) that meet at a common point to form a plurality of refractive points (9) inside the core (3), which reflect part of the supplied light (7) laterally (10).

2. A method according to claim 1, **characterized in that** the laser beams (13) are oriented relative to the fibre (1) so that the refractive points (9) are formed at selected locations in the cross-sectional plane as well as the longitudinal plane of the core (3).

3. A method according to any one of claims 1 and 2, **characterized in that** the laser beams (13) are controlled by a computer (15).

4. A method according to claim 3, **characterized in that** the computer (15) is programmed in advance in order to generate the desired light pattern for the fibre (1).

5. A method according to claim 4, **characterized in that** the refractive points (9) in several fibres (1) is formed according to the same computer program so that the refractive points (9) are uniformly positioned in the individual fibres (1).

6. A method according to any one of claims 1-5, **characterized in that** the refractive points (9) is adapted to from a predetermined refractive index.

7. A method in accordance with any one of claims 1-6, **characterized in that** the refractive index comprises the desired direction and light intensity.

## Patentansprüche

1. Verfahren zum Herstellen von Lichtleitern, d. h. optischen Fasern, wobei das zugeführte Licht lateral ausgestrahlt wird, umfassend mindestens einen Laser zum Übertragen eines Laserstrahls auf die Faser, der die Faser an vorgegebenen Positionen aufheizt, um eine oder mehrere spiegelnde Flächen in der Faser zu erzeugen, **dadurch gekennzeichnet, dass** die Faser (1) an ausgewählten Positionen (14) innerhalb des Kerns (3) durch drei Laserstrahlen (13) aufgeheizt wird, die an einem gemeinsamen Punkt zusammentreffen, um eine Vielzahl von Brechungspunkten (9) innerhalb des Kerns (3) zu bilden, die einen Teil des zugeführten Lichts (7) lateral (10) ausstrahlen.

2. Verfahren nach Anspruch 1, **dadurch gekennzeichnet, dass** die Laserstrahlen (13) relativ zu der Faser (1) ausgerichtet sind, so dass die Brechungspunkte (9) an ausgewählten Positionen in der Querschnittsebene sowie in der Längsebene des Kerns (3) ausgebildet werden.

3. Verfahren nach einem der Ansprüche 1 und 2, **dadurch gekennzeichnet, dass** die Laserstrahlen (13) von einem Computer (15) gesteuert werden.

4. Verfahren nach Anspruch 3, **dadurch gekennzeichnet, dass** der Computer (15) im Voraus programmiert wird, um das erwünschte Lichtmuster für die Faser (1) zu erzeugen.

5. Verfahren nach Anspruch 4, **dadurch gekennzeichnet, dass** die Brechungspunkte (9) in mehreren Fasern (1) gemäß demselben Computerprogramm gebildet werden, so dass die Brechungspunkte (9) einheitlich in den einzelnen Fasern (1) positioniert sind.

6. Verfahren nach einem der Ansprüche 1 bis 5, **dadurch gekennzeichnet, dass** die Brechungspunkte (9) dazu eingerichtet sind, einen vorgegebenen Brechungsindex zu bilden.

7. Verfahren nach einem der Ansprüche 1 bis 6, **dadurch gekennzeichnet, dass** der Brechungsindex die erwünschte Richtung und Lichtintensität umfasst.

## Revendications

1. Procédé pour fabriquer des conduits de lumière, c'est-à-dire des fibres optiques, dans lesquels de la lumière fournie est crayonnée latéralement, comprenant au moins un laser émettant un faisceau laser sur la fibre, qui échauffe la fibre à des emplacements prédéterminés pour former une ou plusieurs zones réflectrices dans la fibre, **caractérisé en ce que** la fibre (1) est échauffée à des emplacements (14) sélectionnés à l'intérieur du coeur (3) par trois faisceaux laser (13) qui se rencontrent en un point commun pour former une pluralité de points réfringents (9) à l'intérieur du coeur (3), qui réfléchissent une partie de la lumière fournie (7) latéralement (10).

2. Procédé selon la revendication 1, **caractérisé en ce que** les faisceaux laser (13) sont orientés par rapport à la fibre (1) de sorte que les points réfringents (9) sont formés à des emplacements sélectionnés dans le plan de coupe transversale ainsi que dans le plan longitudinal du coeur (3).

3. Procédé selon l'une quelconque des revendications 1 et 2, **caractérisé en ce que** les faisceaux laser (13) sont commandés par un ordinateur (15).

4. Procédé selon la revendication 3, **caractérisé en ce que** l'ordinateur (15) est programmé à l'avance afin de générer le motif de lumière désiré pour la fibre (1).

5. Procédé selon la revendication 4, **caractérisé en ce que** les points réfringents (9) dans plusieurs fibres (1) sont formés suivant le même programme informatique de sorte que les points réfringents (9) sont uniformément positionnés dans les fibres individuelles (1).

6. Procédé selon l'une quelconque des revendications 1 à 5, **caractérisé en ce que** les points réfringents (9) sont adaptés pour former un indice de réfraction prédéterminé.

7. Procédé selon l'une quelconque des revendications 1 à 6, **caractérisé en ce que** l'indice de réfraction comprend la direction et l'intensité lumineuse désirées.
